# EUROPÄISCHE PATENTSCHRIFT

(11) **EP 0 592 699 B1**
(45) Veröffentlichungstag und Bekanntmachung des Hinweises auf die Patenterteilung: **24.09.1997**
(21) Anmeldenummer: 92117367.0
(22) Anmeldetag: 10.10.1992
(51) Int. Cl.: A01C 23/04

(54) **Schlauchkupplung**
Hosecoupling
Branchement de tuyau

(43) Veröffentlichungstag der Anmeldung: 20.04.1994
(73) Patentinhaber: Scheipl, Stefan, A-5202 Neumarkt (AT)
(72) Erfinder: Scheipl, Stefan, A-5202 Neumarkt (AT)
(74) Vertreter: Kurig, Thomas

(56) Entgegenhaltungen:
- EP-A- 0 055 501
- AT-B- 367 589
- CH-A- 549 934
- DE-U- 8 707 834
- GB-A- 2 081 561

## Beschreibung

Die vorliegende Erfindung betrifft eine Schlauchkupplung zum Ankuppeln eines mit einem Schlauch verbundenen Anschlußstücks an einen Kupplungsstutzen, gemäß dem Oberbegriff des Anspruchs 1.

Eine derartige Schlauchkupplung ist beispielsweise bekannt aus der DE-U-8707834, die jedoch nachteilig ist, da die Zentriereinrichtung unbeweglich montiert ist und Platz wegnimmt.

Schlauchkupplungen sind insbesondere in der Landwirtschaft bekannt und dienen beispielsweise zur Verbindung eines Gülleschlauchs mit einem Vakuumfaß. Vakuumfässer werden in der Landwirtschaft zum Befüllen, zum Transport und zur Verteilung von flüssigen Wirtschaftsdüngern verwendet. Der Kupplungsvorgang wird herkömmlich manuell ausgeführt, wobei der Benutzer das Anschlußstück manuell zum Kupplungsstutzen führen muß und dort mechanisch einhängt und verriegelt. Sodann wird durch eine Saugleitung ein Unterdruck im Vakuumfaß erzeugt, um den Wirtschaftsdünger zu fördern.

Eine derartige manuelle Schlauchkupplung ist nachteilig, da der Benutzer das zum Schleppen des Vakuumfaßes eingesetzte Fahrzeug verlassen muß, um den zeitraubenden Kupplungsvorgang manuell durchzuführen. Ferner besteht die Gefahr, daß er mit den im Schlauch geförderten Wirtschaftsdüngern, insbesondere der Gülle, in Berührung kommt.

Aufgabe der vorliegenden Erfindung ist es daher, eine Schlauchkupplung zu schaffen, die eine möglichst fluchtende Ankupplung des Anschlußstücks an den Kupplungsstutzen ermöglicht, wodurch ein Abknicken des Schlauches wirksam vermieden ist.

Diese Aufgabe wird erfindungsgemäß durch eine Schlauchkupplung nach Anspruch 1 gelöst.

Die erfindungsgemäße Schlauchkupplung ermöglicht eine halbautomatische Ankupplung des Anschlußstücks an den Kupplungsstutzen. Zu diesem Zweck werden Kupplungsstutzen und Anschlußstück relativ aufeinander zu bewegt, wobei die mit dem Kupplungsstutzen verbundene Führungseinrichtung mit der mit dem Anschlußstück verbundenen gabelartigen Zentriereinrichtung zusammenwirkt. Eine grobe Vorzentrierung von Anschlußstück und Kupplungsstutzen ist ausreichend, wobei sichergestellt ist, daß sich die Führungseinrichtung in dem durch die gabelartige Zentriereinrichtung definierten Aufnahmebereich befindet. Durch die gabelartige Zentriereinrichtung wird mit zunehmender Annäherung des Anschlußstücks an den Kupplungsstutzen das Anschlußstück quer zur Relativbewegung verschoben, so daß eine fluchtende Ausrichtung der Mittelachsen von Anschlußstück und Kupplungsstutzen stattfindet. Die Erfindung ermöglicht somit eine Tiefenzentrierung, bei der die Gefahr des Abknickens des Schlauches wirksam vermieden ist.

Wenn beispielsweise der Kupplungsstutzen an einem beweglichen Vakuumfaß angebracht ist und das Anschlußstück einen Gülleschlauch trägt und beweglich gelagert ist, kann durch Zurücksetzen des Vakuumfasses die Führungseinrichtung in Eingriff mit der gabelartigen Zentriereinrichtung gelangen, so daß das Anschlußstück zentriert wird.

Es ist bevorzugt, daß die Führungseinrichtung einen Führungsstift aufweist, der zur Anlage an der gabelartigen Zentriereinrichtung bestimmt ist, sowie ein mit dem Führungsstift verbundenes im wesentlichen quer erstrecktes Halteteil, das zum Eingriff mit der Zentriereinrichtung bestimmt ist. Der erfindungsgemäße Führungsstift gleitet im Aufnahmebereich der gabelartigen Zentriereinrichtung bzw. an Zentrierstangen der Zentriereinrichtung entlang und gewährleistet auf diese Weise eine Zentrierung von Kupplungsstutzen und Anschlußstück. Voraussetzung ist lediglich, daß vor dem Zentriervorgang die Höhen des Führungsstiftes und der Zentriereinrichtung aufeinander abgestimmt wurden. Das im wesentlichen quer zum Führungsstift erstreckte Halteteil hat die Funktion, die Zentriereinrichtung zu untergreifen und derart geringe Höhendifferenzen zwischen Anschlußstück und Kupplungsstutzen auszugleichen.

Der Schlauch trägt bevorzugt eine Spiralfeder, die sich einerseits am Anschlußstück und andererseits an der Aufnahmeeinrichtung abstützt. Auf diese Weise ist eine Verbindung zwischen Zentriereinrichtung und Anschlußstück gewährleistet, so daß eine Querverschiebung der Zentriereinrichtung zu einer entsprechenden Querverschiebung des Anschlußstücks führt. Die im Rahmengestell gebildete Aufnahmeeinrichtung führt auch den Schlauch, so daß eine einseitige Zentrierung lediglich des Anschlußstücks, die zu einem Abknicken des Schlauchs führen könnte, wirksam verhindert ist. Die um den Schlauch aufgenommene Spiralfeder dient dazu, das Anschlußstück mit Federkraft gegen den Kupplungsstutzen zu spannen, um die notwendige Dichtheit der Schlauchkupplung zu gewährleisten. Wenn die Führungseinrichtung die notwendige Zentrierung erreicht hat, gleitet sie weiter, wodurch der Kupplungsstutzen das Anschlußstück erfaßt und gegen die Rückstellkraft der Spiralfeder nach hinten schiebt.

Die Anordnung hat den Vorteil, daß eine infolge des Eingriffs der Führungseirichtung mit der Zentriereinrichtung ausgelöste quergerichtete Zentrierbewegung zu einer Querverschiebung der gesamten Aufnahmeeinrichtung mit Schlauch und Anschlußstück führt. Dadurch ist eine fluchtende Kupplung des Kupplungsstutzens mit dem Anschlußstück und zumindest dem in der Aufnahmeeinrichtung befindlichen Abschnitt des Schlauchs möglich. Eine Verformung bzw. ein Abknicken des Schlauchs ist wirksam vermieden.

Bevorzugt ist eine elastische Rückstelleinrichtung vorgesehen, die einerseits mit dem Fußteil und andererseits mit dem Strebenteil verbunden ist, wobei die Rückstelleinrichtung das Strebenteil in eine Mittelposition vorspannt, aus der das Strebenteil durch Betätigung der Zentriereinrichtung gegen eine Rückstellkraft der Rückstelleinrichtung auslenkbar ist. Die Rückstelleinrichtung gewährleistet, daß nach Abschluß der Befüllung bzw. des Materialtransports durch den Kupplungsstutzen und nach Entkupplung von Kupplungsstutzen und Anschlußstück die Zentriereinrichtung zusammen mit Schlauch und Anschlußstück wieder in ihre Mittelposition zurückkehrt. Auf diese Weise ist die Zentriereinrichtung für einen neuen Zentriervorgang vorbereitet.

Die Zentriereinrichtung ist bevorzugt mit einer Kupplungsanzeige versehen, die eine schwenkbare Anzeigeeinrichtung aufweist, deren Schwenkstellung den Grad der Kompression der Spiralfeder optisch sichtbar anzeigt. Die schwenkbare Anzeigeeinrichtung ermöglicht eine bequeme Beurteilung des Grads der Spiralfederkompression im Laufe des Zentriervorgangs. So kann beispielsweise der erforderliche Schwenkwinkel bereits von einem Fahrzeug aus berurteilt werden, wenn bei Erreichen des erforderlichen Schwenkwinkels die Anzeigeeinrichtung eine besondere (fluchtende) Position einnimmt.

Die Kupplungsanzeige weist bevorzugt einen längsverschieblichen Positionsfühler auf, der durch die Führungseinrichtung des Kupplungsstutzens verschiebbar ist und mit der Anzeigeeinrichtung verbunden ist, wobei bevorzugt eine Rückspannfeder vorgesehen ist, die den Positionsfühler in eine Ausgangsposition vorspannt. Der Positionsfühler wird zu Beginn der Auslenkung der Spiralfeder von der Führungseinrichtung erfaßt und seine Auslenkung entspricht der linearen Kompression der Spiralfeder.

Die Zentriereinrichtung weist bevorzugt zwei Zentrierstangen auf, die abschnittsweise parallel in einem bestimmten Abstand angeordnet sind, wobei der Positionsfühler im parallelen Abschnitt zwischen den Zentrierstangen gleitend aufgenommen ist. Der Positionsfühler ist bevorzugt zwischen den abschnittsweise parallel erstreckten Zentrierstangen angeordnet, so daß er nach Abschluß des Zentriervorgangs von der Führungseinrichtung erfaßt wird. Die Zentrierstangen sind so angebracht, daß die Spitze ihres gabelförmigen Abschnitts im wesentlichen mit der Ausgangsposition des Positionsfühlers zusammenfällt und derart positioniert ist, daß bei deren Erreichen durch den Führungsstift der Kupplungsstutzen und das Anschlußstück zentriert zur Anlage kommen. Der Zentriervorgang ist hier abgeschlossen und ein weiteres Vorschieben des Führungsstifts führt lediglich zu einer Verpressung des Anschlußstücks gegen einen im Kupplungsstutzen angeordneten Dichtring. Ferner gewährleistet das Halteteil der Führungseinrichtung, daß die Zentrierung von Anschlußstück und Kupplungsstutzen auch während dieser Verpressung gewährleistet bleibt. Zu diesem Zweck untergreift das Halteteil die Zentrierstangen. Eine etwaige Bodenunebenheit führt nun nicht zu einer Dezentrierung, sondern zu einer gemeinsamen Anhebung von Kupplungsstutzen und Anschlußstück, so daß die Zentrierung erhalten bleibt.

Die Aufnahmeeinrichtung weist bevorzugt einen mit dem Fußteil verbundenen Stützbügel auf, der den Schlauch führt und ferner ist bevorzugt zur Festlegung von Schlauch und Spiralfeder eine Haube vorgesehen, die an der Aufnahmeeinrichtung derart befestigbar ist, daß sie die Spiralfeder zumindest abschnittsweise umschließt. Der Stützbügel dient zur Führung des Schlauchs auch im hinteren Bereich des Rahmengestells, so daß eine weitgehende parallele Schlauchführung während des Zentriervorgangs gewährleistet ist. Die Haube ermöglicht eine Festlegung von Schlauch und Spiralfeder an der Aufnahmeeinrichtung, wobei die Spiralfeder besonders bevorzugt über die Haube nach vorne vorsteht, so daß das Anschlußstück nicht starr mit der Aufnahmeeinrichtung verbunden ist, sondern einen gewissen Bewegungsspielraum besitzt, der eine etwaig bestehende Dezentrierung bei Anlage des Anschlußstücks am Kupplungsstutzen ausgleichen kann.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung.
Figur 1 zeigt die erfindungsgemäße Schlauchkupplung von der Seite.
Figur 2 zeigt die in der erfindungsgemäßen Schlauchkupplung verwendete Führungseinrichtung von vorn.
Figur 3 zeigt eine Aufsicht auf die erfindungsgemäße Schlauchkupplung im laufenden Zentriervorgang.
Figur 4 zeigt eine perspektivische Explosionsansicht der erfindungsgemäßen Schlauchkupplung
Figur 5 zeigt eine Aufsicht im Detail auf die erfindungsgemäße Zentriereinrichtung und Kupplungsanzeige.
Figur 6 zeigt eine perspektivische Ansicht des in der Kupplungsanzeige verwendeten Positionsfühlers.

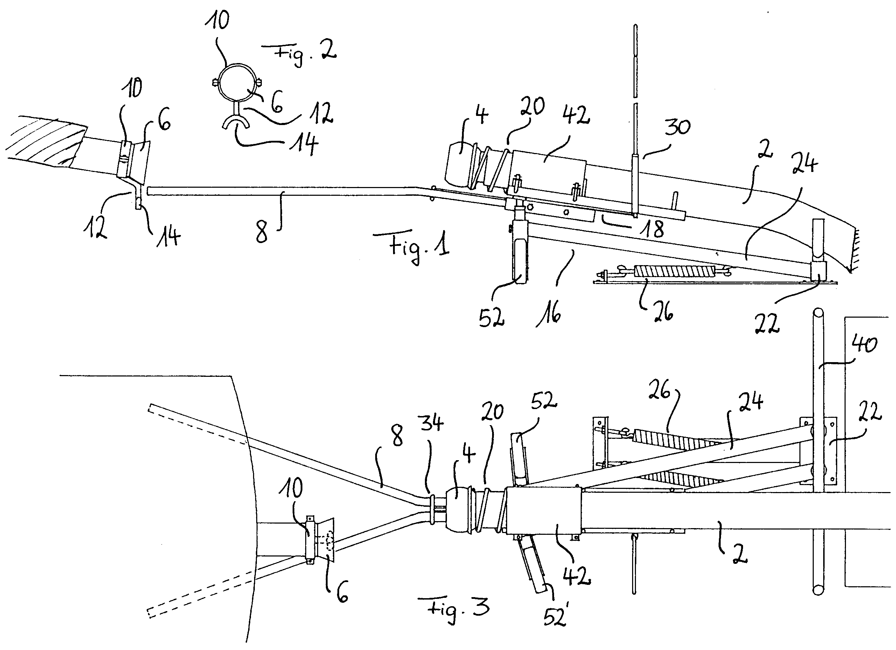

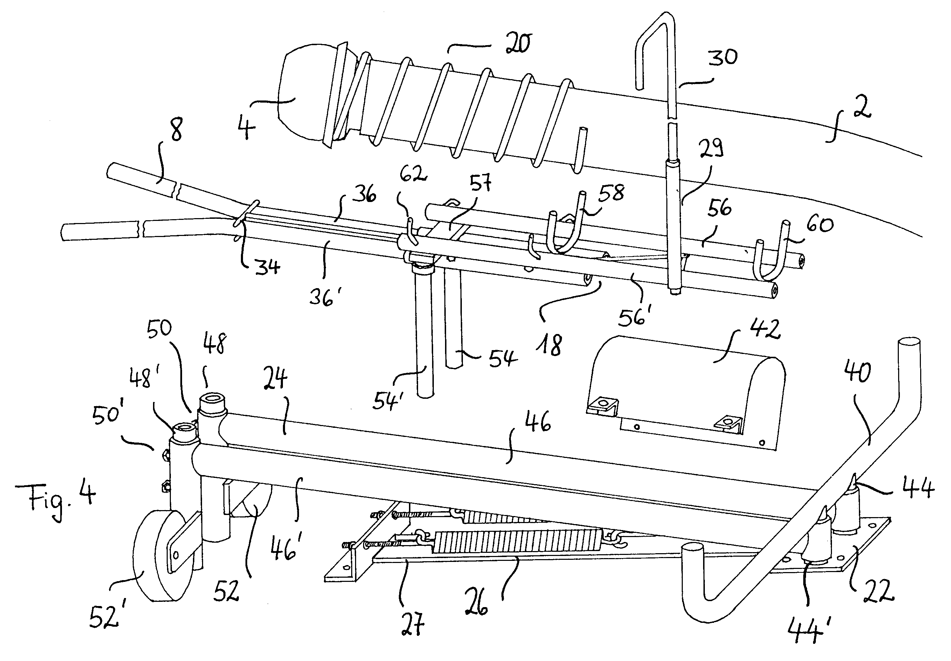

Die in Figur 1 von der Seite gezeigte erfindungsgemäße Schlauchkupplung besteht aus einem auf der linken Seite gezeigten sich trichterförmig erweiternden Kupplungsstutzen 6, der beispielsweise an einem Vakuumfaß angebracht ist. Um den Kupplungsstutzen ist eine schellenartige Führungseinrichtung 10 durch Schraubverbindung angebracht, welche einen sich nach unten vertikal erstreckenden Führungsstift 12 und ein damit verbundenes im wesentlichen quer erstrecktes Halteteil 14 aufweist. Das Halteteil 14 ist halbbogenförmig ausgebildet. Ferner besteht die erfindungsgemäße Schlauchkupplung aus einer auf der rechten Seite gezeigten gabelartigen Zentriereinrichtung 8, die mit einer Aufnahmeeinrichtung 18 verbunden ist, welche ein mit einem Schlauch 2 verbundenes Anschlußstück 4 trägt. Die Zentriereinrichtung 8 ist, wie in Figur 3 zu sehen, gabelförmig ausgebildet.

Das Anschlußstück 4 hat zumindest abschnittsweise Kugelform, so daß es bequem in dem trichterförmigen Stirnteil des Kupplungsstutzens 6 aufnehmbar ist. Zur dichtenden Anlage weist der Kupplungsstutzen 6 innenliegend (nicht gezeigt) einen Dichtring auf, gegen den das Anschlußstück 4 zur Anlage kommt.

Der mit dem Anschlußstück 4 verbundene Schlauch 2 ist durch eine mit der Aufnahmeeinrichtung 18 verbundene halbzylindrische Haube 42 an der Aufnahmeeinrichtung 18 festgelegt. Um den Schlauch 2 ist eine Spiralfeder 20 aufgenommen, die sich einerseits gegen die Aufnahmeeinrichtung 18 und andererseits gegen das Anschlußstück 4 abstützt. Auf diese Weise wird das Anschlußstück 4 nach vorne vorgespannt. Die Spiralfeder 20 steht über die Haube 42 nach vorne vor, so daß das Anschlußstück 4 in einem engen Bereich frei beweglich ist und geringe Dezentrierungen ausgleichen kann.

Die Aufnahmeeinrichtung 18 wird von einem Rahmengestell 16 getragen, das ein am Boden verankertes Fußteil 22 aufweist, mit dem das Rahmengestell am Boden fixiert ist. Ein Strebenteil 24 ist schwenkbar an dem Fußteil 22 gelagert und durch eine elastische Rückstelleinrichtung 26 in eine Mittelposition vorgespannt, in der sich das Strebenteil 24 im wesentlichen senkrecht zum Fußteil und parallel zur Aufnahmeeinrichtung 18 bzw. zum Schlauch 2 erstreckt. Die elastische Rückstelleinrichtung 26 verbindet eine Verlängerung des Fußteils 22 mit dem Strebenteil 24. Ferner ist das Strebenteil 24 auf Rädern 52 längs einer Kreisperipherie verfahrbar.

Am Fußteil 22 ist ferner ein Stützbügel 40 angebracht, der aufstehende Endabschnitte aufweist, zwischen denen der Verschiebebereich des Schlauchs 2 definiert ist.

Wie in Figur 4 zu sehen ist, ist das Fußteil 22 eine ebene rechtwinklige Bodenplatte, die mit Schrauben am Boden verankerbar ist. Auf gleicher Ebene ist das Fußteil 22 mit einer länglichen Halteplatte 27 verbunden, die am anderen Ende ebenfalls mit Schrauben am Boden fixierbar ist. Die Halteplatte 27 weist einen Schulterabschnitt auf, an dem zwei Rückstellfedern 26 angebracht sind. Ferner sind auf dem Fußteil 22 zwei Bolzen 44, 44' angeschweißt, die zur Lagerung des Strebenteils 24 dienen. Zu diesem Zweck weist das Strebenteil 24 zwei Steuerstangen 46, 46' auf, die endseitig zwei Lagerbuchsen bilden, die auf den Bolzen 44, 44' gelagert sind. Auf diese Weise ist jede einzelne Steuerstange 46, 46' um den entsprechenden Bolzen 44, 44' des Fußteils 22 herum verschwenkbar. An der Unterseite der Steuerstangen 46, 46' ist jeweils ein Haken angebracht, der zum Einhängen des anderen Endes der beiden Rückstellfedern 26 dient. Auf diese Weise werden die Steuerstangen 46, 46' bzw. das Strebenteil 24 in eine Mittelposition vorgespannt, in der die Steuerstangen parallel zur länglichen Halteplatte 27 sind.

Am anderen Ende der Steuerstangen 46, 46' sind zwei Fußständer angeschweißt, die die drehbar gelagerten Räder 52, 52' tragen, die in Bodenkontakt sind. Die Drehachsen der beiden Räder sind im wesentlichen parallel zu den Steuerstangen, so daß die Steuerstangen quer zu ihrer Längsrichtung auf dem Boden verfahrbar sind.

Die beiden Fußständer sind rohrartig ausgebildet und tragen in ihrem Inneren Schieberohre 48, 48', die durch Feststellschrauben 50, 50' in beliebiger Höhe fixierbar sind. Diese Höheneinstellung ermöglicht eine Abstimmung der Höhe der Zentriereinrichtung 8 an die Höhe des Führungsstifts 12 des Kupplungsstutzens 6.

Die Schieberohre 48, 48' sind nach unten geschlossen und tragen zwei Lagerbolzen 54, 54' der Aufnahmeeinrichtung 18. Die Lagerbolzen 54, 54' sind jeweils mit Aufnahmestreben 56, 56' der Aufnahmeeinrichtung 18 sowie einer die Aufnahmestreben 56, 56' verbindenden Querstrebe 57 verbunden.

Die beiden Aufnahmestreben 56, 56' der Aufnahmeeinrichtung 18 tragen einen vorderen Haltebügel 58 und einen hinteren Haltebügel 60 zur Aufnahme des Schlauchs 2 und der Spiralfeder 20. Dabei trägt der hintere Haltebügel 60 lediglich den Schlauch, während der vordere Haltebügel den Schlauch und auch die Spiralfeder 20 trägt, die sich an ihm abstützt. Ferner sind an den Aufnahmestreben 56, 56' Haken 62 befestigt, die zur Aufnahme und Befestigung der gekrümmten Haube 42 dienen. Schließlich ist an der Aufnahmestrebe 56' ein Halterohr 29 für eine Anzeigeeinrichtung 30 der Kupplungsanzeige 28 angebracht. An der Unterseite der plattenförmigen Querstrebe 57 sind zwei parallele Zentrierstangen 36, 36' der Zentriereinrichtung 8 angeschweißt. Die Zentrierstangen erstrecken sich in dem von der Querstrebe 57 ausgehenden Bereich zunächst parallel und laufen in ihrem Endbereich gabelförmig bzw. konisch auseinander. Der gabelförmige Endbereich dient der Zentrierung. Dabei ist die den gabelförmigen Bereich vom parallelen Bereich trennende Knickstelle der beiden Zentrierstangen 36, 36' so gelegen, daß beim Eintreffen des Führungsstiftes 12 an der Knickstelle das Anschlußstück 4 zur Anlage an dem Kupplungsstutzen 6 gelangt.

Unmittelbar hinter der Knickstelle ist ein Positionsfühler 34 längsverschieblich zwischen den Zentrierstangen 36, 36' gelagert. Der Positionsfühler 34 wird durch den weiter vorrückenden Führungsstift 12 zurückgeschoben und zeigt auf diese Weise den Kompressionsgrad der vom Anschlußstück 4 zurückgespannten Spiralfeder 20 an. Die Längsverschiebung des Positionsfühlers 34 wird in eine Schwenkbewegung der im oberen Bereich rechtwinklig gekrümmten Anzeigeeinrichtung umgesetzt, die auf diese Weise optisch sichtbar den Kompressionsgrad der Spiralfeder 20 anzeigt.

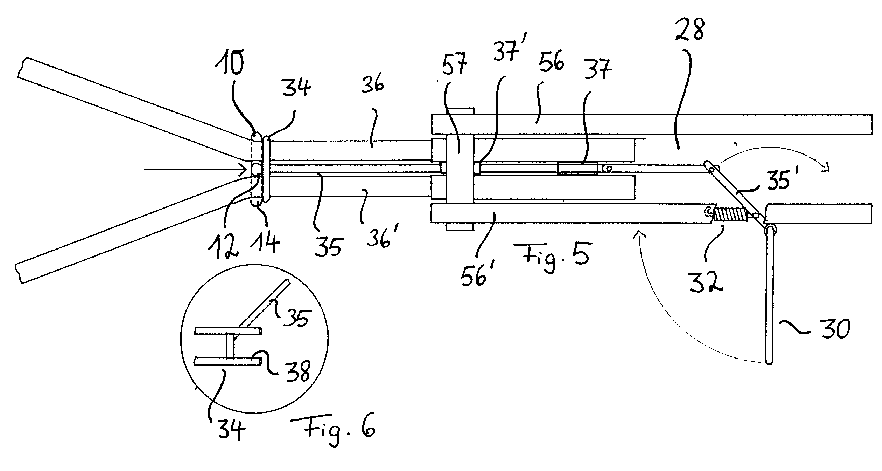

Einzelheiten der Funktionsweise der Kupplungsanzeige 28 sind in den Figuren 5 und 6 gezeigt. Der Positionsfühler 34 ist mit einer Verbindungsstrebe 35 verbunden, die sich zwischen den beiden Zentrierstangen 36, 36' und über diese hinaus erstreckt. Im Bereich der Aufnahmestreben 56, 56' sind die Zentrierstangen 36, 36' verstärkt und tragen zwischen sich zwei voneinander beabstandete Führungsrohre 37, 37', die die Verbindungsstrebe 35 mit geringem Spiel aufnehmen und lagern. Die Verbindungsstrebe 35 ist an ihrem anderen Ende an einer Übergangsstrebe 35' angelenkt, die ihrerseits gelenkig mit der stabförmigen Anzeigeeinrichtung 30 verbunden ist, so daß die Längsbewegung der Verbindungsstrebe 35 in eine Schwenkbewegung der Anzeigeeinrichtung 30 übersetzt wird. Die Übergangsstrebe 35' ist mit einer Rückspannfeder 32 verbunden, die mit ihrem anderen Ende an der Aufnahmestrebe 56' eingehängt ist. Auf diese Weise wird die Verbindungsstrebe 35 zusammen mit dem Positionsfühler 34 in eine Ausgangsposition vorgespannt, in der der Positionsfühler 34 sich im Bereich der Knickstelle der Zentrierstangen 36, 36' befindet.

Der Positionsfühler 34 hat eine H-Form mit einem oberen Gleitstift und einem unteren Gleitstift 38, zwischen denen die beiden Zentrierstangen geführt sind. Das bogenförmige Halteteil 14 der Führungseinrichtung 10, wie in Figur 2 gezeigt, ist dazu eingerichtet, unter die Zentrierstangen 36, 36' zu greifen und diese von unten zu stützen. Dies ist vorteilhaft, wenn infolge gewisser Bodenunebenheiten der Kupplungsstutzen mit dem Anschlußstück 4 nicht höhenzentriert ist. In diesem Fall führt das Halteteil 14 die Zentrierstangen 36, 36' entsprechend nach oben, so daß das Anschlußstück 4 mit dem Kupplungsstutzen 6 höhenzentriert wird. In Figur 5 ist schematisch die in Anlage mit dem Positionsfühler 34 befindliche Führungseinrichtung 10 gezeigt.

Die erfindungsgemäße halbautomatische Schlauchkupplung wird folgendermaßen eingesetzt. Zunächst wird vermittels der höhenverstellbaren Schieberohre 48, 48' eine Höhenzentrierung des Anschlußstücks 4 bezüglich des Kupplungsstutzens 6 erreicht. Sodann wird der an einem motorbetriebenen Vakuumfaß befindliche Kupplungsstutzen 6 zurückgesetzt in Richtung auf das Anschlußstück 4. Im Laufe des Rücksetztvorgangs gelangt der Führungsstift 12 der Führungseinrichtung 10 in Kontakt mit einer Zentrierstange 36, 36' und übt eine quergerichtete Kraft auf die Zentriereinrichtung 8 aus, die diese Kraft auf die Aufnahmeeinrichtung 18 und sodann auf das Strebenteil 24 überträgt, das dieser Querkraft durch eine rädergeführte Verschiebung auf dem Boden folgt. Auf diese Weise wird die gesamte Aufnahmeeinrichtung 18 parallel verschoben, wobei die Rückstellfedern 26 ausgelenkt werden. Die Parallelverschiebung der Aufnahmeeinrichtung 18 hat eine entsprechende Parallelverschiebung des darauf befindlichen Schlauchs zusammen mit dem Anschlußstück 4 zur Folge. Wenn der Führungsstift 12 die Knickstelle der Zentrierstangen 36, 36' erreicht, ist eine fluchtende Anordnung von Kupplungsstutzen, Anschlußstück und Schlauch erreicht, wobei das Anschlußstück 4 zur Anlage an den Kupplungsstutzen 6 gelangt. Aufgrund der freien Verschieblichkeit des Anschlußstücks 4 ist ein Ausgleich einer gewissen Fehlzentrierung sofort möglich.

Bei weiterem Zurücksetzten des Vakuumfasses wird der Führungsstift 12 in Anlage mit dem Positionsfühler 34 zurückgeschoben, so daß das Anschlußstück 4 gegen die Rückstellkraft der Spiralfeder 20 zurückweicht. Die Kompressionsstrecke wird angezeigt durch die Anzeigeeinrichtung 30, wobei der erforderlichen Kompressionsstrecke zur Erreichung einer ausreichenden Dichtheit der Anschlußstück-Kupplungsstutzen-Verbindung eine 90°-Drehung der Anzeigeeinrichtung 30 entspricht. Die Anzeigeeinrichtung 30 ist daher bevorzugt zu Beginn des Zentriervorgangs quer zur Längsrichtung des Schlauchs 2 eingestellt und in dieser Position vom Benutzer gut erkennbar. Nach Abschluß der Zentrierung und Einstellung der erforderlichen Kompressionskraft erreicht die Anzeigeeinrichtung 30 eine um 90° geschwenkte Position, in der ihr bogenförmiges Endteil mit der Blicklinie des Benutzers fluchtet. Der Benutzer kann daher den Rücksetzvorgang bei Erreichen der Fluchtlinie abbrechen und auf diese Weise eine halbautomatische Zentrierung ohne Verlassen seines Fahrzeugs erreichen.

## Patentansprüche

1. Schlauchkupplung mit einem mit einem Schlauch (2) verbundenen Anschlußstücks (4) und einem daran anzukuppelnden Kupplungsstutzen (6), wobei das Anschlußstück mit einer gabelartigen Zentriereinrichtung (8) verbunden ist, die mit einer mit dem Kupplungsstutzen (6) verbundenen Führungseinrichtung (10) derart zusammenwirkt, daß das Anschlußstück (4) und der Kupplungsstutzen (6) zentriert zusammenführbar sind, dadurch gekennzeichnet, daß die Zentriereinrichtung (8) an einem Rahmengestell (16) befestigt ist, welches ein Fußteil (22), das am Boden verankerbar ist, und ein an dem Fußteil (22) schwenkbar gelagertes Strebenteil (24) aufweist, wobei das Strebenteil (24) eine Aufnahmeeinrichtung (18) für den Schlauch (2) mit Anschlußstück (4) derart trägt, daß diese in Querrichtung parallel verschieblich ist.

2. Schlauchkupplung nach Anspruch 1, dadurch gekennzeichnet, daß die Führungseinrichtung (10) einen Führungsstift (12), der zur Anlage an der gabelartigen Zentriereinrichtung (8) bestimmt ist, sowie ein mit dem Führungsstift verbundenes im wesentlichen quer erstrecktes Halteteil (14) aufweist, das zum Eingriff mit der Zentriereinrichtung bestimmt ist.

3. Schlauchkupplung nach Anspruch 1 oder 2, dadurch gekennzeichnet, daß der Schlauch (2) eine Spiralfeder (20) trägt, die sich einerseits am Anschlußstück (4) und andererseits an der Aufnahmeeinrichtung (18) abstützt.

4. Schlauchkupplung nach Anspruch 1, dadurch gekennzeichnet, daß eine elastische Rückstelleinrichtung (26) vorgesehen ist, die einerseits mit dem Fußteil (22) und andererseits mit dem Strebenteil (24) verbunden ist, wobei die Rückstelleinrichtung (26) das Strebenteil (24) in eine Mittelposition vorspannt, aus der das Strebenteil durch Betätigung der Zentriereinrichtung gegen eine Rückstellkraft der Rückstelleinrichtung auslenkbar ist.

5. Schlauchkupplung nach Anspruch 3, dadurch gekennzeichnet, daß die Zentriereinrichtung mit einer Kupplungsanzeige (28) versehen ist, die eine schwenkbare Anzeigeeinrichtung (30) aufweist, deren Schwenkstellung den Grad der Kompression der Spiralfeder (20) optisch sichtbar anzeigt.

6. Schlauchkupplung nach Anspruch 5, dadurch gekennzeichnet, daß die Kupplungsanzeige (28) einen längsverschieblichen Positionsfühler (34) aufweist, der durch die Führungseinrichtung (10) des Kupplungsstutzens (6) verschiebbar ist und mit der Anzeigeeinrichtung (30) verbunden ist, wobei eine Rückspannfeder (32) vorgesehen ist, die den Positionsfühler (34) in eine Ausgangsposition vorspannt.

7. Schlauchkupplung nach Anspruch 6, dadurch gekennzeichnet, daß die Zentriereinrichtung (8) zwei Zentrierstangen (36, 36') aufweist, die abschnittsweise parallel in einem bestimmten Abstand angeordnet sind, wobei der Positionsfühler (34) im parallelem Abschnitt zwischen den Zentrierstangen (36, 36') gleitend aufgenommen ist.

8. Schlauchkupplung nach einem der vorhergehenden Ansprüche, dadurch gekennzeichnet, daß die Aufnahmeeinrichtung (18) einen mit dem Fußteil (22) verbundenen Stützbügel (40) aufweist, der den Schlauch (2) führt, und daß zur Lagefixierung von Schlauch und Spiralfeder eine Haube (42) vorgesehen ist, die an der Aufnahmeeinrichtung (18) derart befestigbar ist, daß sie die Spiralfeder (20) zumindest abschnittsweise umschließt.

9. Schlauchkupplung nach Anspruch 8, dadurch gekennzeichnet, daß die Spiralfeder (20) in Richtung des Anschlußstücks (4) über die Haube (42) vorsteht.

## Claims

1. A hose coupling for coupling a connector (4) to a hose (2) and a coupler socket (6) to be coupled to it, where the connector is connected to a fork-like centering device (8) that works with a guide device (10) connected to the coupler socket (6) so that the connector (4) and the coupler socket (6) can be centered as they are brought together, characterized in that the centering device (8) is attached to a framework (16) which has a foot part (22) that can be anchored on the floor and has a strut part (24) mounted so it can pivot on the foot part (22), where the strut part (24) carries a holding device (18) for the hose (2) with a connector (4) so that this in transverse direction can be displaced in parallel.

2. A hose coupling according to Claim 1, characterized in that the guide device (10) has a guide pin (12) that is intended for coming in contact with the fork-like centering device (8) and a retaining part (14) that extends essentially in the transverse direction, is connected to the guide pin and is intended for engagement with the centering device.

3. A hose coupling according to Claim 1 or 2, characterized in that the hose (2) carries a spiral spring (20) that is supported on the connector (4) on the one hand and on the holding device (18) on the other hand.

4. A hose coupling according to Claim 1, characterized in that an elastic resetting device (26) is provided and is connected to the foot part (22) on the one hand and to the strut part (24) on the other hand, where the resetting device (26) preloads the strut part (24) into a center position from which the strut part can be deflected against a restoring force of the restoring device by operation of the centering device.

5. A hose coupling according to Claim 3, characterized in that the centering device is provided with a coupling display (28) that has a swivel display device (30) whose swivel position displays visibly the degree of compression of the spiral spring (20).

6. A hose coupling according to Claim 5, characterized in that the coupling display (28) has a longitudinally movable position sensor (34) that can be displaced by the guide device (10) of the coupler socket (6), where a back-tension spring (32) is provided to preload the position sensor (34) into a starting position.

7. A hose coupling according to Claim 6, characterized in that the centering device (8) has two centering rods (36, 36') that are arranged in parallel at a certain distance in sections, where the position sensor (34) is held so it slides between the centering rods (36, 36') in the parallel section.

8. A hose coupling according to one of the preceding claims, characterized in that the holding device (18) has a supporting frame (40) that is connected to the foot part (22) and guides the hose (2), and a hood (42) is provided to fix the position of the hose and spiral spring and is attached to the holding device (18) so that it surrounds the spiral spring (20) in at least some sections.

9. A hose coupling according to Claim 8, characterized in that the spiral spring (20) projects above the hood (42) in the direction of the connector (4).

## Revendications

1. Raccord souple avec une pièce de raccordement (4) reliée à un tuyau flexible (2) et avec une tubulure (6) destinée à y être accouplée, la pièce de raccordement étant reliée à un dispositif de centrage (8) en forme de fourche, lequel agit de façon concourante avec un dispositif de guidage (10) relié à la tubulure (6) de manière à ce qu'on puisse aboucher de façon centrée la pièce de raccordement (4) et la tubulure (6), caractérisé en ce que le dispositif de centrage (8) est fixé à un cadre (16) qui est pourvu d'un pied (22) ancrable au sol et d'une tige de renfort (24) montée pivotante sur le pied (22), la tige de renfort (24) portant un dispositif de logement (18) pour le flexible (2) avec la pièce de raccordement (4) de manière à ce que ce dispositif (18) puisse coulisser parallèlement dans le sens transversal.

2. Raccord soudé selon la revendication 1 caractérisé en ce que le dispositif de guidage (10) présente une goupille de positionnement (12) destinée à prendre appui sur le dispositif de centrage en forme de fourche, ainsi qu'une partie de soutien (14) reliée à la goupille de positionnement et s'étendant de façon sensiblement transversale, cette partie étant destinée au contact avec le dispositif de centrage.

3. Raccord soudé selon la revendication 1 ou 2 caractérisé en ce que le flexible (2) est pourvu d'un ressort spiral (20) qui s'appuie sur la pièce de raccordement (4) d'un côté et sur le dispositif de logement (18) de l'autre côté.

4. Raccord soudé selon la revendication 1 caractérisé en ce qu'on prévoit un dispositif de rappel élastique (26) relié au pied (22) d'un côte et à la tige de renfort (24) de l'autre, lequel met cette dernière en précontrainte dans une position médiane à partir de laquelle cette tige peut dévier lorsque le dispositif de centrage est actionné contre une force de rappel du dispositif de rappel.

5. Raccord soudé selon la revendication 3 caractérisé en ce que le dispositif de centrale est pourvu d'un affichage d'accouplement (28) présentant un dispositif d'affichage (30) pivotant dont la position en pivotement indique optiquement à l'utilisateur le degré de compression du ressort spiral (20).

6. Raccord soudé selon la revendication 5 caractérisé en ce que l'affichage d'accouplement (28) est équipé d'un capteur de position (34) pouvant coulisser longitudinalement et que le dispositif de guidage (10) de la tubulure (6) peut déplacer, un ressort de rappel (32) qui met le capteur de position en pré-contrainte dans une position initiale étant prévu.

7. Raccord soudé selon la revendication 6 caractérisé en ce que le dispositif de centrage (18) présente deux tiges de centrage (36, 36') qui sont disposées parallèlement sur une certaine section et à une certaine distance l'une de l'autre, le capteur de position (34) étant logé coulissant entre les tiges de centrage (36, 36') dans la section parallèle.

8. Raccord soudé selon l'une des revendications précédentes caractérisé en ce que le dispositif de logement (18) sera pourvu d'un étrier-support (40) relié au pied (22) qui guidera le flexible (2) et en ce qu'on prévoit pour le maintien en position du flexible et du ressort spiral un capot (42) qui peut être fixé au dispositif de logement (18) de manière à enfermer du moins partiellement le ressort spiral (20).

9. Raccord soudé selon la revendication 8 caractérisé en ce que le ressort spiral (20) fait saillie pardessus le capot (42) en direction de la pièce de raccordement (4).
